# EUROPÄISCHE PATENTSCHRIFT

(11) **EP 3 260 735 B1**
(45) Veröffentlichungstag und Bekanntmachung des Hinweises auf die Patenterteilung: **11.08.2021**
(21) Anmeldenummer: 17175813.9
(22) Anmeldetag: 13.06.2017
(51) Int. Cl.: F16G 13/20, F16H 19/06, B66F 3/06

(54) **SCHUBKETTE**
THRUST CHAIN
CHAINE DE POUSSÉE

(30) Priorität: 15.06.2016 DE 102016110949
(43) Veröffentlichungstag der Anmeldung: 27.12.2017
(73) Patentinhaber: Wippermann jr. GmbH, 58091 Hagen (DE)
(72) Erfinder: Rossaint, Jens, 58313 Herdecke (DE); Rafflenbeul, Thomas, 58091 Hagen (DE)
(74) Vertreter: Patentanwälte Dörner & Kötter PartG mbB

(56) Entgegenhaltungen:
- EP-A1- 0 936 378
- DE-A1-102014 007 458
- DE-U1-202014 004 827
- FR-A1- 2 345 626

## Beschreibung

Die Erfindung betrifft eine Schubkette bestehend aus Bügeln und Kettengliedern, wobei die Bügel U-förmig ausgebildet sind, wodurch Schenkel ausgebildet sind, die durch einen Boden miteinander verbunden sind, und die Schenkel an ihren dem Boden abgewandten Enden Seitenkanten ausbilden und die Bügel an ihren Stirnseiten Stützflächen aufweisen, die in gestreckter Stellung der Kette mit den Stützflächen des benachbarten Bügels in Kontakt stehen, und am Übergang der Stirnflächen zu den Seitenkanten Abrundungen ausgebildet sind, wobei die Kettenglieder und die Bügel durch Bolzen beweglich miteinander verbunden sind.

Schubketten dienen beispielsweise zum Transport von Waren. Sie finden dabei auch Anwendung zum Heben bzw. Absenken der Waren. Im Gegensatz zu konventionellen Ketten, mit denen man Lasten lediglich ziehen kann, besteht mit Schubketten die Möglichkeit, Lasten sowohl zu ziehen als auch zu schieben. Hinzu kommt, dass Schubketten im Vergleich zu konventionellen Ketten nicht gespannt werden müssen.

Schubketten der eingangs genannten Art sind beispielsweise aus der DE 198 05 157 A1 oder der EP 0 936 378 bekannt. Mit diesen Ketten ist grundsätzlich eine zuverlässige Förderung von Waren sowohl im Schub- als auch im Zugmodus möglich. Dies ist durch die an den Stirnseiten der Bügel vorgesehenen Stützflächen hervorgerufen. Gleichzeitig ist durch die Abrundungen ein Abknicken der Kette in eine Richtung möglich.

Die bekannten Schubketten erfüllen die an sie gestellten Aufgaben. Allerdings stellt sich insbesondere unter hohen Belastungen das Problem ein, dass die Stützflächen zum seitlichen Abgleiten neigen, was zu einem Versagen der Schubkette führen kann. Um die Belastungsgrenze der Schubketten zu erhöhen, finden Materialien mit höherer Qualität für die Bügel Anwendung oder es wird die Materialstärke der Bügel erhöht. Beide Maßnahmen führen jedoch zu höheren Kosten bei der Herstellung der Schubketten.

Hier will die Erfindung Abhilfe schaffen. Der Erfindung liegt die Aufgabe zu Grunde, eine Schubkette zu schaffen, bei der auch unter hohen Belastungen ein seitliches Abgleiten der Bügel verhindert ist. Gemäß der Erfindung wird diese Aufgabe dadurch gelöst, dass mindestens eine Stützfläche der Bügel Mittel zur Übertragung von Querkräften aufweist.

Mit der Erfindung ist eine Schubkette geschaffen, die unter hohen Belastungen nicht zum Versagen neigt. Insbesondere ist das seitliche Abgleiten der Schenkel der Bügel vermieden. Durch die Möglichkeit, Querkräfte übertragen zu können, wird unter hoher Belastung die Berührung der Kontaktflächen verstärkt, was ein Versagen vermeidet.

In vorteilhafter Weiterbildung der Erfindung sind die Mittel zur Übertragung von Querkräften von Verzahnungen gebildet. Solche Verzahnungen lassen sich in einfacher Weise an den Stirnflächen der Bügel anbringen, sodass der fertigungstechnische Aufwand gering ist. Beispielsweise können die Verzahnungen, soweit die Bügel als Stanz-Biegeteil hergestellt sind, in den ohnehin vorgesehenen Stanzvorgang integriert werden.

Die Aufgabe wird erfindungsgemäß durch Anspruch 1 gelöst.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die abschnittsweise Darstellung einer Schubkette;
- Figur 2: die Draufsicht auf die in Figur 1 dargestellte Schubkette;
- Figur 3: die Untersicht der in Figur 1 dargestellten Schubkette;
- Figur 4: die Seitenansicht von links der in Figur 1 dargestellten Schubkette;
- Figur 5: die perspektivische Darstellung von oben der in Figur 1 dargestellten Schubkette;
- Figur 6: die perspektivische Darstellung von unten der in Figur 1 dargestellten Schubkette;

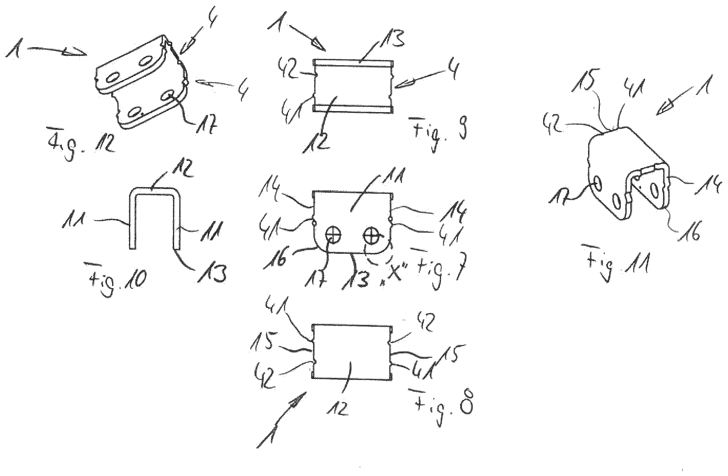

- Figur 7: die Ansicht eines Bügels;
- Figur 8: die Draufsicht auf den in Figur 7 dargestellten Bügel;
- Figur 9: die Untersicht auf den in Figur 7 dargestellten Bügel;
- Figur 10: die Seitenansicht von rechts des in Figur 7 dargestellten Bügels;
- Figur 11: die perspektivische Darstellung von oben des in Figur 7 dargestellten Bügels;
- Figur 12: die perspektivische Darstellung von unten des in Figur 7 dargestellten Bügels;
- Figur 13: die abschnittsweise Darstellung einer Schubkette in anderer Ausgestaltung in abgewinkelter Position;
- Figur 14: die Untersicht auf die in Figur 13 dargestellte Schubkette;
- Figur 15: die perspektivische Darstellung von oben der in Figur 13 dargestellten Schubkette;
- Figur 16: das Detail "X" aus Figur 7 in vergrößerter Darstellung;

Die in den Ausführungsbeispielen dargestellten Schubketten bestehen aus Bügeln 1 und Kettengliedern 2. Die Bügel 1 und die Kettenglieder 2 sind durch Bolzen 3 beweglich miteinander verbunden.

Die Bügel 1 bestehen üblicherweise aus Kohlenstoff-Stahl oder rostfreiem Stahl. In Abwandlung können die Bügel auch aus Kunststoff hergestellt sein. Zudem können die Bügel 1, Kettenglieder 2 und/oder Bolzen 3 mit Beschichtungen versehen sein, um beispielsweise einen Schutz gegen Korrosion zu erzielen, zum Beispiel durch Beschichtungen aus Nickel, Zink oder Lacken. Auch Beschichtungen zum Schutz gegen Verschleiß sind möglich, beispielsweisedurch Hartverchromen oder beschichten mit Chemisch Nickel. Die Bügel 1 sind U-förmig ausgebildet. Hierdurch sind Schenkel 11 ausgebildet, die durch einen Boden 12 miteinander verbunden sind. Die Schenkel 11 bilden an ihren dem Boden 12 abgewandten, freien Enden Seitenkanten 13 aus. In den Schenkeln 11 sind Lochungen 17 für den Durchtritt der Bolzen 3 vorgesehen.

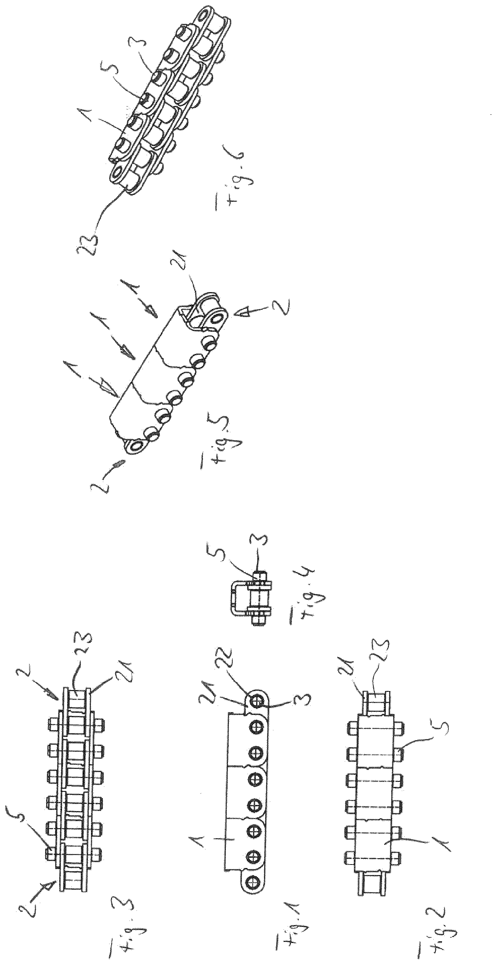

An ihren Stirnseiten weisen die Bügel 1 an den Schenkeln 11 Stützflächen 14 und am Boden 12 Stützflächen 15 auf, die in gestreckter Stellung der Kette, wie sie beispielsweise in den Figuren 1 bis 6 dargestellt ist, mit den Stützflächen 14, 15 des jeweils benachbarten Bügels 1 in Kontakt stehen. Am Übergang der vertikal ausgerichteten Stirnflächen 14 an den Schenkel 11 zu den Seitenkanten 13 sind an jedem Bügel 1 Abrundungen 16 ausgebildet.

Die Abrundungen 16 haben einen kurvenförmigen Verlauf. In der Vergrößerung des Details "X" in Figur 16 ist der Verlauf der Abrundung 16 im Vergleich zum Verlauf einer Kreisbahn gegenübergestellt, wobei die Kreisbahn als Strichlinie dargestellt ist. Die Kreisbahn hat den Radius Rs, welcher der Schwenkradius um den Mittelpunkt der Bolzen 3 wiedergibt. Ersichtlich beginnt die Krümmung der Abrundung 16 im Abstand a zur Horizontalen H und endet im Abstand b zur Vertikalen V. Es ist erkennbar, dass der Abstand a zur Horizontalen H kleiner als der Abstand b zur Vertikalen V ist. Der Schnittpunkt der Strichlinien des Abstands a zur Horizontalen H und des Abstands b zur Vertikalen ist mit "S" gekennzeichnet. Aus der Vergrößerung ist zudem zu entnehmen, dass der Abstand zwischen dem Schnittpunkt S und der Abrundung 16 im Abstand a zur Horizontalen H größer ist als der Abstand zwischen dem Schnittpunkt S und der Abrundung 16 im Abstand b zur Vertikalen V. Daraus ergibt sich, dass die Abrundungen 16 keinen teilkreisförmigen Verlauf haben. Vielmehr verkleinert sich der Radius von der Horizontalen in Richtung zur Vertikalen. Die Abrundungen 16 weisen in Folge dessen einen Spannbereich Bs und einen Einlaufbereich B_{E} auf. Durch diese konstruktive Ausgestaltung wird bei der Umlenkung der Schubelemente eine Vorspannung im Bereich der Abrundungen erzeugt. Diese Vorspannung bleibt im ausgestreckten Zustand erhalten und erzeugt zusätzlich durch die Kantengestaltung eine Rastung der Schubelemente. Das bei den aus dem Stand der Technik bekannten Schubketten vorhandene Spiel zwischen den einzelnen Schubelementen wird auf diese Weise aufgehoben. Die Schubkette wird dadurch stabilisiert und neigt daher nicht zum Kippen.

Mindestens eine Stützfläche 14, 15 der Bügel 1 weist Mittel 4 zur Übertragung von Querkräften auf. Erfindungsgemäß sind die Mittel 4 zur Übertragung von Querkräften formschlüssig ausgebildet. In den Ausführungsbeispielen sind die Mittel 4 zur Übertragung von Querkräften von Verzahnungen an den Schenkeln 11 und an dem Boden 12 gebildet. Die Verzahnungen sind im Ausführungsbeispiel jeweils von einem vorstehenden Zahn 41 und einer benachbart dazu angeordneten Kerbe 42 gebildet. Erkennbar sind die Zähne 41 und Kerben 42 derart an den Stützflächen 14, 15 angeordnet, dass sie mit den Zähnen 41 und Kerben 42 der jeweils benachbarten Bügel in Eingriff treten können.

Die Kettenglieder 2 bestehen jeweils aus zwei Laschen 21, die jeweils mit zwei Lochungen 22 versehen sind. In die Lochungen 22 sind jeweils Buchsen fest eingepresst, auf denen jeweils eine Rolle 23 läuft. Die Rollen 23 sind auf den Buchsen der Kettenglieder 2 drehbar gelagert.

Anstelle einfacher Stahlbuchsen können die Kettenglieder mit ölgetränkten Sinterbuchsen versehen sein. Auch die Verwendung von Polymergleitlagern ist möglich. Diese Maßnahmen ermöglichen den Aufbau sauberer, schmierstofffreier und wartungsfreier Schubketten.

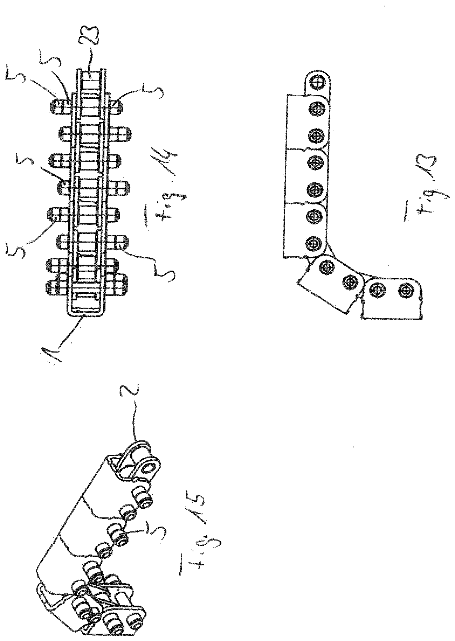

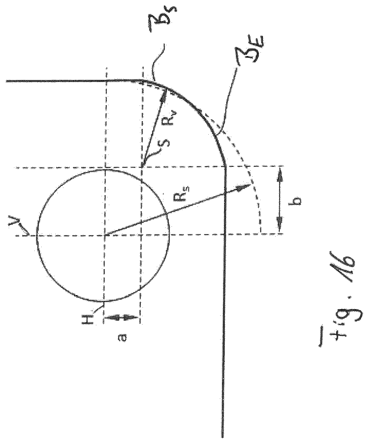

Im Ausführungsbeispiel sind die Bolzen 3 über die Schenkel 11 der Bügel 1 verlängert ausgebildet. Auf den überstehenden Bereich der Bolzen 3 sind Führungsrollen 5 montiert, mit denen eine Abstützung und Umlenkung der Schubkette im Antrieb ermöglicht ist. Wie der Darstellung nach Figur 14 und 15 entnommen werden kann, können die Bolzen 3 derart verlängert sein, dass zwei Führungsrollen 5 nebeneinander montierbar sind. Beim Ausführungsbeispiel nach den Figuren 13 bis 15 sind auf den Bolzen 3 abwechselnd eine oder zwei Rollen 5 angeordnet. Hierdurch lässt sich eine unterschiedliche Kurvenbahn bei der Umlenkung der jeweiligen Bolzen eines Bügels 1 hervorrufen.

Bei der erfindungsgemäßen Schubkette werden Schub- und Querkräfte direkt auf benachbarte Bügel 1 übertragen. Die Kettenglieder 2 sind somit nicht am Kraftfluss in Druckrichtung beteiligt. Durch die erfindungsgemäßen Mittel 4 zur Übertragung von Querkräften ist das seitliche Abgleiten der Stützflächen unter hoher Belastung vermieden. Die im Ausführungsbeispiel nach Art einer Verzahnung ausgebildeten Mittel 4 zur Übertragung von Querkräften stellen eine formschlüssige Verbindung dar, bei der jede Stützfläche eines Bügels 1 in die Stützfläche des benachbarten Bügels 1 eingreift. Durch die erfindungsgemäße Ausgestaltung ist einerseits die Übertragung von Querkräften zwischen den Bügeln möglich, andererseits ist das seitliche Abgleiten der Bügel unter hohem Druck vermieden. Dieses seitliche Abgleiten der sich gegenüberliegenden Stützflächen stellt bei bekannten Schubketten das Haupt-Versagensrisiko dar. Ein solches Versagen bei Überlast tritt schlagartig, also ohne vorherige Ankündigung auf, wodurch der Betrieb unmittelbar unterbrochen ist. Dem ist durch die erfindungsgemäße Ausgestaltung entgegengewirkt, sodass eine höhere Tragfähigkeit bei gleichzeitig höherer Sicherheit mit besserer Ausnutzung des Materials hervorgerufen ist. Auf die Verwendung höherwertiger Materialien sowie eine Vergrößerung der Materialstärken zur Vermeidung des seitlichen Abgleitens kann somit verzichtet werden.

## Patentansprüche

1. Schubkette bestehend aus Bügeln (1) und Kettengliedern (2), wobei die Bügel (1) U-förmig ausgebildet sind, wodurch Schenkel (11) ausgebildet sind, die durch einen Boden (12) miteinander verbunden sind, und die Schenkel (11) an ihren dem Boden (12) abgewandten Enden Seitenkanten (13) ausbilden und die Bügel (1) an ihren Stirnseiten Stützflächen (14, 15) aufweisen, die in gestreckter Stellung der Kette mit den Stützflächen (14, 15) des benachbarten Bügels (1) in Kontakt stehen, und am Übergang der Stirnflächen (14) zu den Seitenkanten (13) Abrundungen (16) ausgebildet sind, wobei die Bügel (1) und die Kettenglieder (2) durch Bolzen (3) beweglich miteinander verbunden sind, **dadurch gekennzeichnet, dass** die Abrundungen (16) einen kurvenförmigen Verlauf haben, der von einem teilkreisförmigen Verlauf abweicht, wobei sich der Radius von der Horizontalen in Richtung zur Vertikalen verkleinert.

2. Schubkette nach Anspruch 1, **dadurch gekennzeichnet, dass** die Abrundungen (16) einen Spannbereich (Bs) und einen Einlaufbereich (B_{E}) aufweisen, die derart ausgebildet sind, dass sich beim Strecken der Schubkette eine Vorspannung zwischen den Bügeln aufbaut.

## Claims

1. Thrust chain consisting of brackets (1) and chain links (2), wherein the brackets (1) are U-shaped, whereby legs (11) are formed, which are connected to one another by a base (12), and which legs (11) form side edges (13) at their ends facing away from the base (12) and the brackets (1) have bearing surfaces (14, 15) on their end faces, which are in contact with the bearing surfaces (14, 15) of the adjacent bracket (1) in the stretched position of the chain, and at the transition from the end faces (14) to the side edges (13) roundings (16) are formed, wherein the brackets (1) and the chain links (2) are movably connected to one another by bolts (3), **characterised in that** the roundings (16) have a curved course, which deviates from a part-circular course, wherein the radius decreases from the horizontal in the direction of the vertical.

2. Thrust chain according to claim 1, **characterised in that** the roundings (16) have a tensioning area (B_{S}) and a run-in area (B_{E}), which are formed in such a manner that a preload builds up between the brackets during stretching of the thrust chain.

## Revendications

1. Chaîne de poussée composée d'étriers (1) et de maillons de chaîne (2), sachant que les étriers (1) sont configurés en U, faisant que sont formées des branches (11) reliées entre elles par un fond (12), et que les branches (11) forment des bords latéraux (13) en leurs extrémités ne regardant pas le fond (12) et que les étriers (1) présentent contre leurs côtés frontaux des surfaces d'appui (14, 15) qui, lorsque la chaîne se trouve en position étirée, entrent en contact avec les surfaces d'appui (14, 15) de l'étrier voisin (1), et que sur la zone de transition entre les surfaces frontales (14) et les bords latéraux (13) sont formés des arrondis (16), sachant que les étriers (1) et les maillons de chaîne (2) sont reliés mobiles les uns avec les autres grâce à des goujons (3), **caractérisée en ce que** les arrondis (16) présentent un tracé curviligne différent d'un tracé en forme d'arc de cercle, sachant que le rayon va en diminuant de l'horizontale en direction de la verticale.

2. Chaîne de poussée selon la revendication 1, **caractérisée en ce que** les arrondis (16) présentent une zone de serrage (Bs) et une zone d'admission (B_{E}) configurées de sorte que lors de l'étirement de la chaîne de poussée une précontrainte s'établit entre les étriers.
